# EUROPÄISCHE PATENTSCHRIFT

(11) **EP 0 527 381 B1**
(45) Veröffentlichungstag und Bekanntmachung des Hinweises auf die Patenterteilung: **05.11.1997**
(21) Anmeldenummer: 92112790.8
(22) Anmeldetag: 27.07.1992
(51) Int. Cl.: C08L 69/00, C08L 31/02

(54) **Verträgliche Polymermischungen mit thermoplastischen Polycarbonaten**
Compatible polymer blends with thermoplastic polycarbonates
Compositions de polymères compatibles avec des polycarbonates thermoplastiques

(30) Priorität: 09.08.1991 DE 4126422
(43) Veröffentlichungstag der Anmeldung: 17.02.1993
(73) Patentinhaber: BAYER AG, 51368 Leverkusen (DE)
(72) Erfinder: Lütjens, Holger, Dr., W-5000 Köln 80 (DE); Piejko, Karl-Erwin, Dr., W-5060 Bergisch Gladbach 2 (DE); Plaetschke, Rüdiger, Dr., W-5090 Leverkusen 1 (DE); Lindner, Christian, Dr., W-5000 Köln 80 (DE); Kirsch, Jürgen, Dr., W-5090 Leverkusen 1 (DE)

(56) Entgegenhaltungen:
- EP-A- 0 264 792
- EP-A- 0 378 863
- EP-A- 0 436 895
- DE-A- 2 658 849

## Beschreibung

Gegenstand der vorliegenden Erfindung sind Mischungen bestehend aus:
A) thermoplastischen Polycarbonaten auf Basis von 2,2-Bis-(4-hydroxyphenyl)-propan in Mengen von 90 Gew.-% bis 30 Gew.-%, und
B) in Mengen von 10 Gew.-% bis 70 Gew.-%, bezogen auf 100 Gew.-% A) + B), harzartigen Vinylpolymerisaten, enthaltend Struktureinheiten der Formel (Ia) 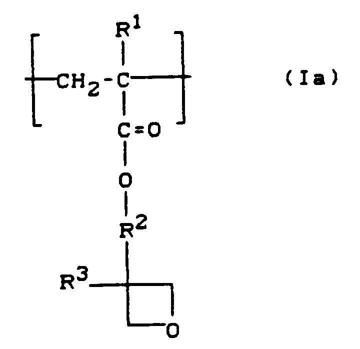 worin
   - R¹: H oder CH₃,
   - R²: C₁-C₄-Alkylen und
   - R³: C₁-C₄-Alkyl sind,
   in Mengen von 100 Gew.-% bis 70 Gew.-%, bezogen auf das Gesamtgewicht der Komponente B) und C) gegebenenfalls üblichen Additiven und Stabilisatoren. Die Summe der Gew.-% der Komponenten A) + B) beträgt 100.

Derartige Mischungen sind voll verträglich (einphasig) miteinander mischbar, über Schmelzcompoundierung ohne Entmischung der Einzelkomponenten herstellbar und thermoplastisch verarbeitbar. Sie eignen sich somit beispielsweise zur Herstellung von optischen Speichermedien.

Gegenüber reinen thermoplastischen Polycarbonaten mit hoher Schmelzviskosität und optischer Anisotropie von Spritzgußteilen, bieten die erfindungsgemäßen Mischungen eine leichtere Verarbeitbarkeit und eine verminderte optische Anisotropie.

Gegenüber den reinen Vinylpolymerisaten gemäß Komponente B) (siehe DE-OS 3 901 030) haben die erfindungsgemäßen Mischungen eine verbesserte Wärmeformbeständigkeit.

EP 263 378 beschreibt transparente Blends aus BPA-Polycarbonat und Polymethylmethacrylat (PMMA), deren Herstellung aber von speziellen Parametern, wie Molgewicht der Komponenten, Herstellungsverfahren des PMMA, Temperatur u.a. abhängig ist. D.R. Paul et. al. zeigen im Abstracts der 6th Annual Meetings, Polymer Processing Society in Nizza (Frankreich) auf, daß Blends aus BPA-Polycarbonat und PMMA im Prinzip nur dann einphasig und transparent sind, wenn sie über Lösung hergestellt werden. Die Blends unterliegen aber beim Erhitzen einer Phasenseparation (Entmischung), was durch die untere kritische Lösungstemperatur (LCST) beschrieben wird, die wiederum unter den bei der thermoplastischen Verarbeitung von BPA-Polycarbonatblends üblichen Temperaturen (T >220°C) liegt. Werden also BPA-Polycarbonat und PMMA über den Schmelzzustand vermischt (z.B. durch Schmelzcompoundierung über Mischaggregate wie Kneter oder Extruder) erhält man nur opake, phasenseparierte Blends. Haben die Einzelkomponenten die für eine technische Nutzung relevanten Molgewichte, ist eine thermoplastische Verarbeitung des Blends ohne Entmischung der Einzelkomponenten nicht möglich.

Aus der bereits zitierten DE-OS 3 901 030 sind nicht nur Oxetangruppen-haltige Vinylpolymerisate sondern auch deren Mischungen mit anderen thermoplastischen Polymerisaten oder mit Pfropfpolymerisaten beschrieben. Die Verwendung derartiger Mischungen zur Herstellung von optischen Speichermedien ist in der DE-OS weder angesprochen noch nahegelegt.

Aus der DE-OS 40 00 233 sind Mischungen von Polycarbonaten, Pfropfpolymerisaten und gegebenenfalls thermoplastischen Vinylpolymerisaten bekannt, die 0,05 bis 5 Gew.-% Strukturelemente (Ia), bezogen auf die Gesamtwirkung, enthalten. Durch die Anwesenheit der Pfropfpolymeren ist keine Transparenz und soweit keine Eignung für optische Speichermedien möglich.

An der DE-OS 2 658 849 sind Polycarbonate mit Zusätzen von polymeren Oxetanen in Mengen von 0,01 Gew.-% bis 5,0 Gew.-% (Anspruch 2 der DE-OS) beziehungsweise von 0,01 Gew.-% bis 0,50 Gew.-% (Seite 6 der DE-OS) bekannt. Die polymeren Oxetane haben jedoch eine andere Struktur und sie dienen dazu, die Oxydationsbeständigkeit und die Hydrolysebeständigkeit der Polycarbonate zu verbessern.

Aus der DE-OS 2 510 463 war außerdem bekannt, Kunststoffe durch Oxetanverbindungen in Kombination mit Phosphiten zu stabilisieren.

Als Kunststoffe dienen die verschiedensten Arten (Seite 7 der DE-OS). Derart stabilisierte Polycarbonate eignen sich besonders zum Einsatz auf dem lichttechnischen Sektor (Seite 9 der DE-OS). Die Stabilisatormenge beträgt 0,01 bis 1 Gew.-% an Mischung mit Phosphit.

Aus der DE-OS 2 255 639 ist darüber hinaus bekannt, thermoplastische Polycarbonate durch oxetangruppenhaltige Phosphite gegen Wärmealterung zu stabilisieren. Die Mengen betragen 0,01 bis 0,2 Gew.-%.

Die letztgenannten drei deutschen Offenlegungsschriften legen unseres Erachtens den Gegenstand der vorliegenden Erfindung auch nicht nahe, weil strukturell andere Oxetane in anderen Mengen den Polycarbonaten einverleibt werden.

Thermoplastische Polycarbonate auf Basis von 2,2-Bis-(4-hydroxyphenyl)-propan(Bisphenol A) sind solche, die an Diphenolen 100 Mol-% bis 55 Mol-%, vorzugsweise 100 Mol-% bis 70 Mol-% und insbesondere 100 Mol-% 2,2-Bis-(4-hydroxyphenyl)-propan und komplementäre Molmengen von 45 Mol-% bis 0 Mol-%, vorzugsweise 30 Mol-% bis 0 Mol-% und insbesondere 0 Mol-% andere Diphenole als 2,2-Bis-(4-hydroxyphenyl)-propan unkondensiert enthalten, wobei 1,1-Bis-(4-hydroxyphenyl)-cyclohexan und 1,1-Bis-(4-hydroxyphenyl)-3,3,5-trimethylcyclohexan bevorzugt sind.

Die erfindungsgemäß einzusetzenden Polycarbonate auf Basis von Bisphenol-A gemäß Komponente A) haben Molekulargewichte Mw (Gewichtsmittel, ermittelt durch Gelchromatographie nach vorheriger Eichung) von 10 000 bis 200 000 g/mol, bevorzugt von 12 000 bis 100 000 g/mol.

Die harzartigen Vinylpolymerisate, erfindungsgemäß einsetzbar als Komponente B), sind hergestellt gemäß DE-OS 3 901 030 aus den Monomeren der Formel I 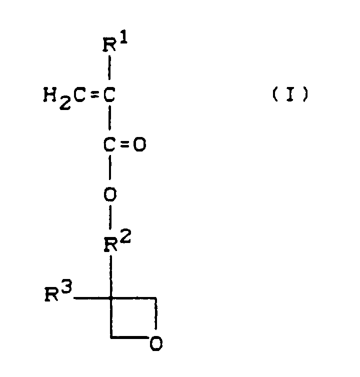 worin
- R¹: H, CH₃,
- R²: C₁-C₄-Alkylen,
- R³: C₁-C₄-Alkyl,
wobei vorzugsweise R¹ H oder CH₃ ist, R² -CH₂- und R³ CH₃ oder C₂H₅ sind.

Gegebenenfalls sind bis zu 30 Gew.-% und vorzugsweise bis zu 20 Gew.-% und insbesondere bis zu 10 Gew.-% andere Vinylmonomere copolymerisiert. Die Struktureinheiten der Formel (I) sind somit in den Vinylpolymerisaten der Komponente B) in Mengen von 100 Gew.-% bis 70 Gew.-%, vorzugsweise von 100 Gew.-% bis 80 Gew.-% und insbesondere von 100 Gew.-% bis 90 Gew.-% und ganz besonders zu 100 Gew.-%, bezogen auf das Gesamtgewicht der Komponente B), enthalten.

Andere Vinylmonomere sind vorzugsweise Vinylaromaten sowie andere Acrylsäureester und Methacrylsäureester als solche der Formel (I) wie beispielsweise Styrol, α-Methylstyrol, Acrylsäureester, Methacrylsäureester, bevorzugt Styrol, α-Methylstyrol, Methylmethacrylat, Cyclohexylmetharylat und Phenylmethacrylat.

"Harzartig" bedeutet im vorliegenden Zusammenhang mit Komponente B), daß die Polymerisate unvernetzt sind, Erweichungstemperaturen von oberhalb 30°C haben und thermoplastisch verarbeitbar sind. Die Vinylpolymerisate können nach bekannten Verfahren der Polymerisation bevorzugt in organischen Lösungsmitteln oder in wäßriger Suspension oder Emulsion durch radikalische oder thermische Polymerisation aus den Monomeren hergestellt werden. Das angewendete Polymerisationsverfahren muß sicherstellen, daß die Oxetanylgruppen erhalten bleiben (beispielsweise muß man bei der Emulsionspolymerisation stark saures (pH <1) und stark alkalisches (pH >12) Milieu in Kombination mit höheren Temperaturen meiden).

Das Molekulargewicht der Vinylpolymerisate kann wie üblich beeinflußt werden durch Polymerisationstemperatur, Monomerenkonzentration, Katalysatormenge und durch Molekulargewichtsregler. Dies sind bevorzugt Organoschwefelverbindungen, z.B. Mercaptane oder Disulfide, insbesondere langkettige Mercaptane wie n- und tert.-Dodecylmercaptan. Die Regler werden normalerweise im Monomerengemisch gelöst.

Die Molekulargewichte Mw (Gewichtsmittel) der Vinylpolymerisate sind bevorzugt 3000 bis 800 000 g/mol, besonders bevorzugt 10 000 bis 500 000 g/mol (ermittelt durch Lichtstreuung oder Sedimentation).

Die Monomeren der Formel (I) sind literaturbekannt (siehe US 3 105 838) oder nach literaturbekannten Verfahren herstellbar.

Der Ersatz von Bisphenol A durch andere Bisphenole im Polycarbonat A und der Einsatz anderer Vinylmonomere als solche der Struktur (I) zur Herstellung von B sind kritisch. Beide Varianten können dazu führen, daß die Mischungen aus A und B nicht mehr verträglich sind. Der Effekt hängt dabei vom Typ der substituierten Bausteine und deren Anteil im Polymer ab sowie auch von der Zusammensetzung der jeweils anderen erfindungsgemäßen Komponente und auch vom Mischungsverhältnis aus A und B. In kritischen Fällen muß deshalb die Zusammensetzung der Komponenten A und B so gewählt werden, gegebenenfalls durch Reduktion des Anteils der jeweils substituierenden Monomere, daß ein verträglicher (einphasiger) Blend durch Schmelzcompoundierung erhalten wird. Das Vorliegen eines verträglichen Blends kann beispielsweise durch Bestimmen der Glastemperatur, beispielsweise durch DSC-Messungen überprüft werden.

Die erfindungsgemäßen Mischungen aus A) + B) und gegebenenfalls C) können auch durch Mischen von Lösungen der Einzelkomponenten in einem geeigneten Lösungsmittel für die Komponenten A),B) und gegebenenfalls C) und anschließendes Fällen oder Ausdampfen hergestellt werden. Geeignete Lösungsmittel sind im Prinzip alle, die die Komponenten A) und B) lösen, insbesondere Methylenchlorid und Tetrahydrofuran.

Eine bevorzugte Möglichkeit, die erfindungsgemäßen Polymermischungen herzustellen, besteht darin, die Polymeren über den Schmelzzustand bei Temperaturen über 200°C, bevorzugt über 220°C zu vermischen. Das Vermischen kann in üblichen Mischaggregaten wie Walzen, Knetern, Ein- oder Mehrwellenextrudern erfolgen.

Gegenstand der vorliegenden Erfindung ist somit auch ein Verfahren zur Herstellung der erfindungsgemäßen Mischungen aus A) und B), und gegebenenfalls C) das dadurch gekennzeichnet ist, daß man entweder a) die Komponenten A) und B) und gegebenenfalls C) über ihre Lösungen mischt und die erhaltene Lösung in bekannter Weise ausdampft und das Gemisch isoliert, oder b) die Komponenten A) und B) und gegebenenfalls C) über deren Schmelzzustand bei Temperaturen von über 200°C, vorzugsweise von über 220°C in üblichen Mischaggregaten vermischt und anschließend schmelzcompoundiert oder schmelzextrudiert.

Die Polymermischungen sind zur Herstellung von Formkörpern aller Art mit Methoden der thermoplastischen Formgebung wie Extrusion und Spritzguß geeignet. Die Polymermischungen können beispielsweise zur Herstellung von optischen Disks eingesetzt werden.

Gegenstand der vorliegenden Erfindung ist somit auch die Verwendung der erfindungsgemäßen Mischungen aus den Komponenten A) und B) und gegebenenfalls C) zur Herstellung von optischen Speichermedien, insbesondere von optischen Disks.

### Beispiele

### 1. Ausgangsverbindungen

### Komponente A:

Bisphenol A-Polycarbonat, hergestellt gemäß DE 28 42 005, mit einer rel. Lösungsviskosität ηᵣₑₗ = 1,20 (gemessen in Methylenchlorid bei einer Konzentration von 0,5 g/100 ml bei 25°C).

### Komponente B-1:

Homopolymerisat, hergestellt durch Lösungspolymerisation des Monomeren der Formel (II) in Ethylbenzol 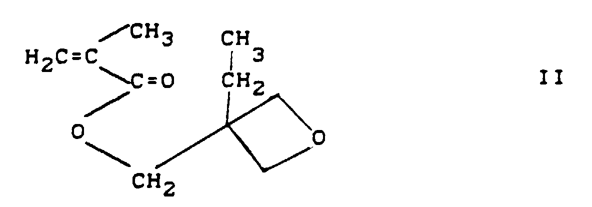 Das Polymerisat besitzt eine Intrinsic-Viskosität von (η) = 0,20 dl/g (gemessen in Methylenchlorid).

### Komponente B-2:

Homopolymerisat, hergestellt durch wäßrige Emulsionspolymerisation des Monomeren (II) mit dem Natriumsalz der disproportionierten Abietinsäure als Emulgator bei pH 10.

Das Polymerisat wurde durch Koagulation des Polymerisatlatex mit einer wäßrigen Magnesiumsulfat-NatriumacetatEssigsäurelösung (pH 4,2) und üblichen Aufarbeitung isoliert.

Das Polymerisat besitzt eine Intrinsic-Viskosität von (η) = 1,24 dl/g.

### 2. Mischungen aus der Komponente A und den Komponenten B (erfindungsgemäß)

### Herstellungsmethode A:

Die Komponenten A und B-1 werden in dem in der Tabelle angegebenen Gewichtsverhältnis in Methylenchlorid gelöst. Aus der Lösung werden Filme gegossen (500 µm naß) und diese bis zur Gewichtskonstanz bei 50°C im Vakuum getrocknet.

### Herstellungsmethode B:

Die Komponenten A und B-1 bzw. B-2 werden in den in der Tabelle angegebenen Gewichtsverhältnissen in einem Haake-Kneter bei einer Temperatur von 240°C 8 Minuten durchmischt (Umdrehungszahl: 50 rpm).

Die hergestellten Mischungen werden differentialkalorimetrisch untersucht mit einer Aufheizung bis 250°C. Angegeben sind in der Tabelle die Lage der Glasübergänge der Mischungen.

**Tabelle**

| Glasübergänge der Mischungen | | | | | |
|---|---|---|---|---|---|
| Beispiele | Zusammensetzung in Gew.-% Komponenten | | | Herstellungsmethode | Glastemperatur in °C |
| | A | B-1 | B-2 | | |
| 2.1 | 100 | - | - | - | 148 |
| 2.2 | - | 100 | - | - | 52 |
| 2.3 | 50 | 50 | - | A | 103 |
| 2.4 | 75 | 25 | - | B | 106 |
| 2.5 | 50 | - | 50 | B | 104 |
| 2.6 | 75 | - | 25 | B | 112 |

Die Mischungen der Beispiele 2.3 bis 2.6 zeigen nur einen Glasübergang und sind somit einphasig. Das BPA-Polycarbonat (Komponente A) ist mit dem Poly(oxetanmethacrylat) (Komponente B) voll verträglich, unabhängig vom Molgewicht und Herstellungsverfahren der Komponente B bzw. der Herstellungsmethode der Polymermischungen (siehe Beispiel 2.4 im Vergleich zu 2.6 und Beispiel 2.3 im Vergleich zu 2.5).

Die Mischungen sind auch dann einphasig, wenn deren Herstellung über den Schmelzzustand (Schmelzcompoundierung) verläuft (siehe Beispiele 2.4 bis 2.6).

## Patentansprüche

1. Mischungen bestehend aus:
A) thermoplastischen Polycarbonaten auf Basis von 2,2-Bis-(4-hydroxyphenyl)-propan in Mengen von 90 Gew.-% bis 30 Gew.-%, und
B) in Mengen von 10 Gew.-% bis 70 Gew.-%, bezogen auf 100 Gew.-% A) + B), harzartigen Vinylpolymerisaten enthaltend Struktureinheiten der Formel (Ia) 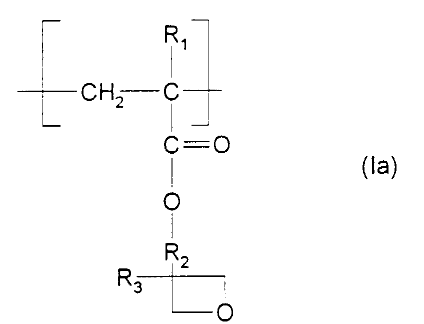 worin
R₁ H oder CH₃,
R₂ C₁-C₄-Alkylen und
R₃ C₁-C₄-Alkyl sind,
in Mengen von 100 Gew.-% bis 70 Gew.-%, bezogen auf das Gesamtgewicht der Komponente B) und
C) gegebenenfalls weiteren Additiven und Stabilisatoren.

2. Mischungen gemäß Anspruch 1, von A in Mengen von 90 Gew.-% bis 40 Gew.-% und von B in Mengen von 10 Gew.-% bis 60 Gew.-%.

3. Verfahren zur Herstellung der Mischungen des Anspruchs 1, dadurch gekennzeichnet, daß man entweder
a) die Komponenten A),B) und gegebenenfalls C) über ihre Lösungen mischt und die erhaltene Lösung in bekannter Weise ausdampft und das Gemisch isoliert, oder
b) die Komponenten A),B) und gegebenenfalls C) über den Schmelzzustand bei Temperaturen von über 200°C in üblichen Mischaggregaten vermischt und anschließend schmelzcompoundiert oder schmelextrudiert.

4. Verwendung der Mischungen des Anspruchs 1 zur Herstellung von optischen Speichermedien.

## Claims

1. Mixtures consisting of:
A) thermoplastic polycarbonates based on 2,2-bis(4-hydroxyphenyl)propane in quantities of from 90 wt.% to 30 wt.%, and
B) in quantities of from 10 wt.% to 70 wt%, referred to 100 wt% A) + B), resinous vinyl polymers containing structural units corresponding to the formula (la) 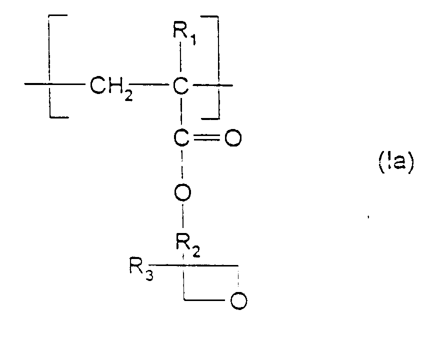 wherein
R₁ is H or CH₃,
R₂ is C₁-C₄ alkylene and
R₃ is C₁-C₄ alkyl,
in quantities of from 100 wt.% to 70 wt.%, referred to the total weight of component B) and
C) optionally other additives and stabilisers.

2. Mixtures, according to claim 1, of A) in quantities of from 90 wt.% to 40 wt.% and of B) in quantities of from 10 wt.% to 60 wt.%.

3. A process for producing the mixtures according to claim 1, characterised in that either
a) components A), B) and optionally C) are mixed in the form of their solutions and the solution obtained is evaporated in a known manner and the mixture isolated, or
b) components A), B) and optionally C) are mixed together in the molten state at temperatures of above 200°C in conventional mixing units and are then melt-compounded or melt-extruded.

4. Use of the mixtures according to claim 1 for the production of optical storage media.

## Revendications

1. Mélanges constitués par:
A) des polycarbonates thermoplastiques à base du 2,2-bis-(4-hydroxyphényl)-propane dans des quantités de 90% en poids à 30% en poids, et
B) dans des quantités de 10% en poids à 70% en poids rapportés à 100% en poids de A) + B) , des polymères vinyliques résineux contenant des unités de structure répondant à la formule (Ia) 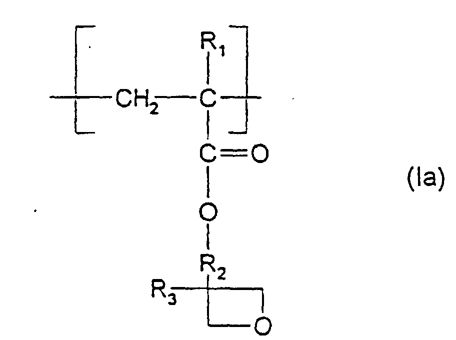 dans laquelle
R¹ représente H ou CH₃,
R² représente un groupe alkylène en C₁-C₄ et
R³ représente un groupe alkyle en C₁-C₄,
dans des quantités de 100% en poids à 70% en poids rapportés au poids total du composant B), et
C) le cas échéant, d'autres additifs et d'autres stabilisateurs.

2. Mélanges selon la revendication 1, de A dans des quantités de 90% en poids à 40% en poids et de B dans des quantités de 10% en poids à 60% en poids.

3. Procédé pour la préparation des mélanges selon la revendication 1, caractérisé en ce que
a) soit on mélange les composants A), B) et éventuellement C) via leurs solutions, on évapore de manière connue la solution obtenue et on isole le mélange,
b) soit on mélange les composants A), B) et éventuellement C) dans des agrégats de mélange habituels via l'état en fusion à des températures supérieures à 200°C et on les soumet ensuite à un mélangeage en fusion ou à une extrusion en fusion.

4. Utilisation des mélanges selon la revendication 1, pour la fabrication de supports d'enregistrement optiques.
